# EUROPÄISCHE PATENTSCHRIFT

(11) **EP 1 814 953 B1**
(45) Veröffentlichungstag und Bekanntmachung des Hinweises auf die Patenterteilung: **18.01.2012**
(21) Anmeldenummer: 05793959.7
(22) Anmeldetag: 19.10.2005
(51) Int. Cl.: C08L 101/00, C08J 3/00, C08L 23/06, C08L 23/10, B29C 45/00, C08K 5/01, C08L 23/04

(54) **POLYMERMISCHUNGEN FÜR SPRITZGUSS ANWENDUNGEN**
POLYMER MIXTURES FOR INJECTION-MOLDING APPLICATIONS
MELANGES POLYMERES POUR APPLICATIONS DE MOULAGE PAR INJECTION

(30) Priorität: 19.10.2004 DE 102004051093
(43) Veröffentlichungstag der Anmeldung: 08.08.2007
(73) Patentinhaber: InnoGEL AG, 6331 Hünenberg (CH)
(72) Erfinder: MÜLLER, Rolf, CH-8055 Zürich (CH); INNEREBNER, Federico, CH-8049 Zürich (CH)
(74) Vertreter: Becker, Eberhard
(86) Internationale Anmeldenummer: PCT/CH2005/000611
(87) Internationale Veröffentlichungsnummer: WO 2006/042433

(56) Entgegenhaltungen:
- WO-A-2004/092280
- US-A- 3 222 431
- US-A- 4 087 505
- US-A- 5 047 468
- US-A- 5 110 685

## Beschreibung

Die Erfindung betrifft Spritzguss Formkörper erhalten aus Polymermischungen, die Infolge eines deutlich verbesserten Fliessvermögens und höherer Kristallisationsgeschwindigkeit reduzierte Zykluszeiten und damit eine erhöhte Wirtschaftlichkeit ermöglichen. Dabei werden ausserdem die mechanischen Eigenschaften der Spritzgussteile verbessert.

### Kurze Beschreibung der Erfindung und Stand der Technik

Die Produktivität und damit die Wirtschaftlichkeit von Spritzgussverfahren werden hauptsächlich durch die Zykluszeit bestimmt Die Zykluszeiten können durch die Parameter des Spritzgusswerkzeugs wie bsw. deren Helz und Kühlleistung sowie durch die Wahl des Polymers beeinflusst werden. Eine Steigerung der Heiz- und Kühlleistung von Spritzgusswerkzeugen ist heute weitgehend optimiert. Diese Parameter können jedoch nicht unabhängig vom eingesetzten Polymer maximiert werden, da eine zu hohe Kühlleistung die Eigenschaften des Produkts negativ beeinträchtigt Der E-Modul und die Streckgrenze von PE-Spritzgussteilen b8w. nimmt mit zunehmender Abkühlgeschwindlgkelt deutlich ab. Durch die Wahl eines Polymers mit hohem MFI (Melt Flow Index) kann die Einspritz- und die Formtemperatur infolge des besseren Fllessvermögens reduziert werden, wodurch auch die Zykluszeit verkürzt werden kann. Solche High MFI Polymere mit guten Materialeigenschaften sind im Allgemeinen jedoch teurer als Comodity Low MFI Polymere. Ein hoher MFI wird durch ein tiefes erhalten. Da die mechanischen Elgenschaften mit abnehmendem Molekulargewicht typischerweise abnehmen, sind auch diesbezüglich hinsichtlich der Wahl von Polymeren mit tiefem MFI Grenzen gesetzt. Eine weitere Möglichkeit besteht im Einsatz von Fliesehilfen, die als Additive der Spritzgussmasse beigemischt werden. Der Einsatz dieser niedermolekularen und niederviskosen Additive liegt typischerweise im Bereich von 1%, da höhere Konzentration en die Eigenschaften der Spritzgussprodukte beeinträchtigen. Eine Reduktion der Zykluszeit ist daher beim Einsatz von solchen Additiven stark limitiert.

Die Erfindung beschreibt eine neue Möglichkeit, die Zykluszeiten durch Einsatz von geeigneten Polymermischungen, welche mindestens zwei synthetische Komponenten P(I) und P(j) aufweisen, deutlich zu reduzieren. Somit kann die Wirtachaftlichkeit der Spritz-gussverfahren erheblich gesteigert werden. Die vorliegende Erfindung betrifft daher Spritzguss-Formkörper gemäß Anspruch 1. Bevorzugte Ausführungsformen sind in den Unteransprüchen wiedergegeben. Die eingesetztePolymermischung weist mit dem wachsartigen Polymer P(j) einen niedermolekularen Anteil auf der synergistisch mit dem hochmolekularen Polymer P(i) interagiert. Solange die Polymermischung In Form einer Schmelze vorliegt, wird durch das niedermolekulare Polymer P(j) die Viskosität herabgesetzt bzw. der MFI erhöht, wodurch die Zykluszeit reduziert werden kann. Beim Abkühlen findet dann eine gleichzeitige Kristallisation der beiden Komponenten statt, wobei synergistisch Mischkristallite bzw. Heterokristallite von P(i) und P(j) entstehen. Also wird das niedermolekulare Polymer P(j) In den Verband des makromolekularen Netzwerks des Polymers P(i) eingebaut und wird damit gewissermassen zu einem makromolekularen Polymer. Daher kann eine Reduktion des MFI erhalten werden, ohne die Nachteile von reduzierten mechanischen Eigenschaften, die sonst beim Einsatz eines niedermolekularen Polymers üblich sind, zu erhalten. Im Cegenteil werden dabei sogar die mechanischen Eigenschaften des Spritzgusstells verbessert, wenn ein P(j) eingesetzt wirt, dass sehr gut kristallisieren kann, weil dadurch eine verbesserte Kristallisiebarkeit auch von P(i) induziert wird. Dadurch wiederum werden schnellere Kühlzeiten ermöglicht. Es können somit im Gegensatz zu den bisherigen Additiven, die nur im Bereich von 1% eingesetzt werden können, sehr viel höhere Gehalte an P(j) von 3 bis zu 30% eingesetzt werden, womit eine sehr viel ausgeprägtere Zunahme des MFI möglich ist und die Zykluszeiten entsprechend deutlicher reduziert werden können.

Damit diese Vorteile erhalten werden können, müssen die beiden Polymere P(i) und P(j) hinsichtlich struktureller Voraussetzungen aufeinander angepasst sein, müssen sie in der Schmelze molekulardispers miteinander gemischt vorliegen und es muss eine Entmischung vor der Kristallisation verhindert werden, denn Im thermodynamischen Gleichgewicht ist für Polymere von deutlich unterschiedlichem Molekulargewicht, wie dies bei P(i) und P(j) der Fall ist, eine Entmischung in zwei separate Phasen der stabile Zustand. Dies ist beim Einsatz von geeigneten Polymermischungen und bei geeigneter Prozessführung möglich, selbst bei Gehalten von P(j) bis oberhalb von 30%.

Gemäß einer möglichen Ausführungsform der vorliegenden Erfindung liegt der Anteil von P(j) an der Polymermischung im Bereich von 1 bis 40 Gew. %.

Die vorliegende Erfindung ist eine Weiterentwicklung der Patentanmeldung WO 2004/09228 desselben Anmelders, deren Offenbarung in diese Erfindung hiermit eingeschlossen ist.

In der Patent Veröffentlichung US 2002/0045022 A1 werden Schraubverschlüsse für Flaschen beschrieben, die im Spritzgussverfahren hergestellt werden können und neben einem Polymer ein Additiv zu einem Anteil von 0,01 bis 1 Gew.% aufweisen, womit die Gleiteigenschaften der Schraubverschlüsse verbessert werden können. Das Additiv kann ein natürlicher Lignit oder Montan Wachs oder ein polarer Polyolefin oder Paraffin Wachs sein. Die Lignit und Montan Wachse sind jedoch nicht synthetischen Ursprungs wie die niedermölekularen P(j) der vorliegenden Erfindung und die polaren Wachse sind infolge der polaren Gruppen nicht kompatibel im Sinne der vorliegenden Erfindung mit dem Polymer, da sie infolge der polaren Gruppen nicht mit diesem zusammen Mischkristallite bilden können. Die Additive werden denn auch in tieferen Anteilen zugemischt und nicht um das Spritzgussverfahren zu optimieren, sondern um die Oberflächenreibung der Verschlüsse zu verbessern.

In der Patent Veröffentlichung US 2004/0030287 A1 wird eine durch Spritzguss hergestellte Kunststoffspritze beschrieben, die auf Polypropylen basiert und bis 10% eines Polyethylen Wachs aufweist. Auch hier wird der Wachs zur Verbesserung der Gleitelgenschaft eingesetzt und sind Polypropylen und Polyethylen Wachs nicht kompatibel im Sinne der vorliegenden Erfindung, auch dann nicht, wenn das Polypropylen bis 5% Ethylen Einheiten aufweisen kann, wie in der Veröffentlichung beschrieben, da die vorliegende Erfindung eine Block Anordnung der Ethylen Einheiten mit einer Länge von mindestens 15 Einheiten verlangt, während in der Veröffentlichung die Ethylen Einheiten vorzugsweise zufällig verteilt vorliegen. Da der Wachs zur Verbesserung der Gleiteigenschaften eingesetzt wird, ist die Bildung von. Mischkristalliten nicht im Sinne der Veröffentlichung, da dann der Wachs in Kristallite gebunden ist und keinen Beitrag zur Verbesserung der Gleiteigenschaft mehr leisten kann.

Ähnliche Polymermischungen wie die den erfindungsgemässen Spritzguss Formkörpern zugrunde liegenden sind bekannt.

Die US 4 087 505 beschreibt ein Verfahren zum Herstellen eines kiebrigen Polyolefinfilms aus einem Polyolefinharz mit hohem Molekulargewicht, einem Polyolefin mit niedrigem Molekulargewicht und einem die Klebrigkeit fördernden Bestandteil, bei dem es sich um ein Terpen-Harz, ein Petroleum-Harz oder dgl, handelt. Durch Spritzgiessen hergestellte Formkörper werden nicht erwähnt.

Die US 5 110 685 beschreibt eine abriebfeste Polymerbeschichtung mit einem geringen Reibungskoeffizienten, insbesondere gegenüber Glas. Hierzu werden ein HDPE mit hohem Molekulargewicht und ein HDPE mit niedrigem Molekulargewicht zu einem homogenen physikalischen Gemisch verarbeitet. Durch Spritzgiessen hergestelite Formkörper werden nicht erwähnt.

Die US 3 222 431 beschreibt ein bedruckbares Polyethylen, das ein oxidiertes und thermisch degradiertes Polyethylen enthält. Das Polyethylene hat dabei ein hohes Molekulargewicht, während das beigemischte modifizierte Polyethylen (Wachs) ein niedriges Molekulargewicht hat. Durch die Beimischung des modifizierten PE-Harzes wird die Bedruckbarkeit verbessert. Ein molekulardisperses Mischen der Komponenten und hohe Abkühlgeschwindigkeiten beim Spritzgiessen der Mischung werden nicht erwähnt.

Die US 5 047 468 beschreibt ein Verfahren zum Mischen verschledener Polymere während Ihrer Herstellung aus der Gasphase. Auch hier ist von hohen Abkühlgeschwindigkeiten beim Spritzgiessen der Mischung keine Rede.

Die WO 2004/092280 A1 offenbart die Herstellung von Polymermischungen, die ein erstes synthetisches Polymer P(i) mit einem Polymerisationsgrad von mehr als 500 und ein zweites synthetisches Polymer P(j) mit einem Polymerisationsgrad zwischen 20 und 500 enthalten. Die Herstellung dieser Polymermischungen erfolgt durch molekulardisperses Mischen der geschmolzenen Polymerkomponenten P(i) und P(j) und unter Ausbildung eines Netzwerkes durch Heterokristallisation. Von hohen Abkühlgeschwindigkeiten beim Spritzgiessen der Mischung ist keine Rede.

### Ausführliche Beschreibung der Erfindung

Die vorliegende Erfindung beschreibt die notwendigen Voraussetzungen bezüglich der Strukturgrössen von P(i) und P(j), sowie die Bedingungen der Herstellung von geeigneten Mischungen davon, damit diese beiden Polymere synergistisch unter Heterokristallisation vorteilhaft kristallisieren können, wobei das infolge der kurzen kettenlänge sehr gut kristallisierbare P(j) Kristallinität bei P(i) induziert und ein Netzwerk entsteht, dessen Verknüpfungspunkte Misch- bzw. Heterokristallite von P(i) und P(j) sind und dessen Verbindungselemente aus Kettensegmenten von P(i) bestehen. Bei geeigneten Herstellungsbedingungen kann aus der Mischung von P(i) und P(j) ein Werkstoff erhalten werden, der gegenüber P(i) eine höhere Kristallinität, einen höheren E-Modul, eine höhere Streckgrenze, eine vergleichbare Bruchdehnung und eine vergleichbare bis verbesserte Schlagzähigkeit sowie eine verbesserte Spannungsrisskorrosionsbeständigkeit aufweist, während die Viskosität der Schmelze deutlich reduziert, bzw. der MFI deutlich erhöht wird, die Schmelze somit einfacher verarbeitet werden kann, insbesondere im Spritzgussverfahren die Zykluszeit signifikant reduziert werden kann.

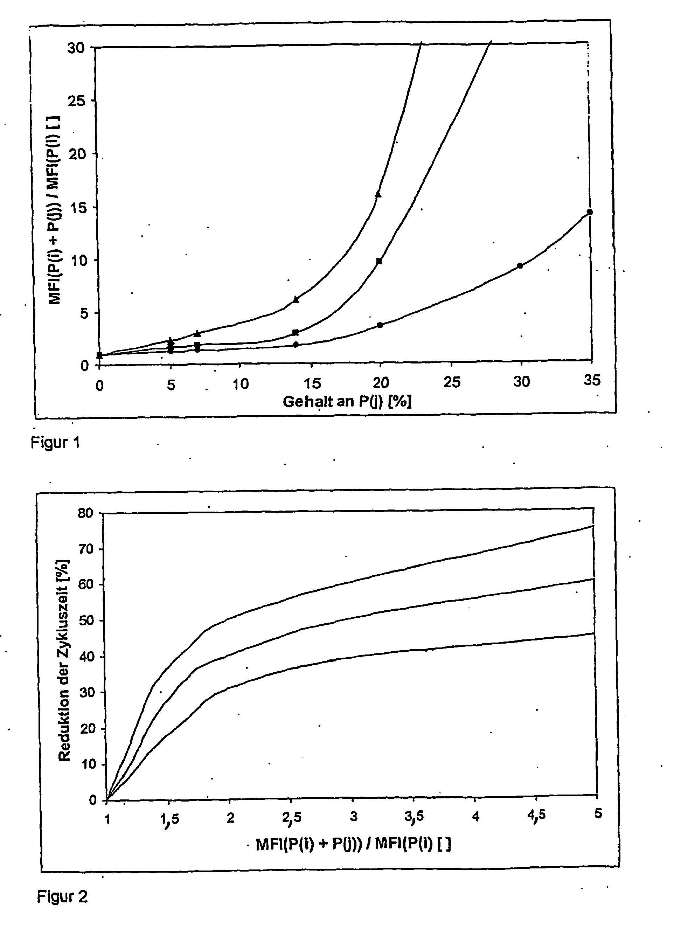

Die Zunahme des MFI mit dem Gehalt an P(j) ist in Figur 1 für drei verschiedene P(i) dargestellt. Die oberste und die unterste Kurve geben den Bereich an, innerhalb dem ein Kurvenverlauf für übliche Spritzguss Polymere beim Einsatz von P(j) liegt. Infolge des deutlich erhöhten MFI von P(i) + P(j) gegenüber dem MFI von P(i) wird beim Spritzguss eine ganze Reihe von Verbesserungen möglich. Die Schmelze kann mit tieferer Einspritztemperatur bei tieferem Druck in die Form eingespritzt werden, das Formfüllungsvermögen ist verbessert, die Form muss weniger hoch geheizt werden, kürzere Nachdruckzeiten sind möglich und die Form kann schneller gekühlt werden, weil P(i) + P(j) gegenüber P(i) schneller kristallisiert und weniger eingefrorene Spannungen engtstehen, die später zu Rissbildung oder Spannungsrisskorrosion führen. Insgesamt ermöglichen diese Verbesserungen eine Reduktion der Zykluszeit beim Spritzgussverfahren, wodurch die Wirtschaftlichkeit erheblich verbessert werden kann.

Die Wirkung der Zunahme des MFI von P(i) + P(j) gegenüber dem MFI von P(i) auf die Zykluszeit ist in Figur 2 dargestellt, wobei die oberste und die unterste Kurve das Streuband angeben und die mittlere Kurve einen durchschnittlichen Fall charakterisiert. Die Kurven wurden anhand von Erfahrungswerten von Zykluszeiten von Polymeren mit unterschiedlichem MFI und mittels Modellrechnungen ermittelt. Das Streuband umfasst kleine Spritzgussteile im Bereich von einigen Gramm bis hin zu grossen Teilen im Bereich von einigen Kilos und mehr, sowie verschiedene Geometrie und Wandstärken. Die Zykluszeit der Mischung von P(i) + P(j) wird im Vergleich zur Zykluszeit von P(i) um > 7%, vorzugsweise > 15%, noch bevorzugter > 25%, am bevorzugtesten > 30% und maximal um etwa 70% reduziert.

Das dieser Erfindung zugrunde liegende Prinzip wird hier für Polyolefine, insbesondere für Polyethylene erläutert, ist jedoch auch auf weitere Polymere analog anwendbar.

### P(i)

Das erste Polymer P(i) ist ein beliebiges synthetische Polymer mit einem Polymerisationsgrad DP > 3000, das zumindest eine minimale Kristallinität aufweist. Es kann sowohl linear sein, als auch Kurz- und Langkettenverzweigungen aufweisen. Es kann ein Homopolymer, ein Copolymer, ein Terpolymer oder ein höheres Polymer sein, vorausgesetzt mindestens eine Art der unterschiedlichen Monomereinheiten sind mindestens teilweise in Sequenzen angeordnet. Eine Sequenz wird hier als ein Abschnitt eines Polymers verstanden, der aus denselben Monomereinheiten oder einer regelmässigen Abfolge von Monomereinheiten und aus mehr als 20 solcher Einheiten aufgebaut ist (d.h. der Polymerisationsgrad von sich wiederholenden Einheiten der Sequenzen DPs ist > 20), weder Kürz- noch Langkettenverzweigungen aufweist und für diesen Abschnitt auch bezüglich der Konformation die Voraussetzungen für die Kristallisation solcher Sequenzen gegeben sind. Eine Sequenz kann in der Hauptkette und/oder in einer Seitenkette angeordnet oder auch eine Seitenkette sein. Beim Abkühlen aus der Schmelze weisen solche Polymere zumindest eine minimale Kristallinität auf.

Damit effektive Verbindungen zwischen den Mischkristalliten gebildet werden können, ist der Polymerisationsgrad von P(i), DP(P(i)) > 3000.

Der Polymerisationsgrad der kristallisierbaren Sequenzen von P(i), DPs(P(i)) ist > 20, vorzugsweise > 30, noch bevorzugter > 50. Mit zunehmendem DPs(P(i)) nimmt die Kristallinität von P(i) sowie der Schmelzpunkt Tm dieser Kristallite zu. Ebenso nimmt die Neigung zur Bildung von Mischkristalliten mit P(j) zur

Für P(i) können grundsätzlich alle Polymere eingesetzt werden, welche die genannten Bedingungen erfüllen. In einer nicht einschränkend zu verstehenden Aufzählung sind dies bzw. die kristallisierbaren Sequenzen der Polymere Polyolefine wie PP und PE, insbesondere HDPE, HMWPE, UHMPE, LDPE, LLDPE, VLDPE, sowie ABS, PUR, PET, PVC.

Insbesondere Spritzguss Typen dieser Polymere können eingesetzt werden, wobei durch Zumischen eines Anteils an P(j) die Spritzbarkeit und die Overall Performance erheblich verbessert werden kann. Bei Zugabe von 10 bis 15% P(j) wird der MFI typischerweise verdoppelt. Je nach Polymer kann die Zunahme des MFI bei diesem Anteil an P(j) 50 bis 600% betragen. Bei 20% P(j) ist sogar eine Zunahme des MFI um bis oberhalb 1000% machbar.

Damit ein synergistischer Effekt zwischen P(j) und den kristallisierbaren Sequenzen von P(i) möglich ist, muss im Falle von Block-Copolymeren oder höheren Polymeren das Massenverhältnis zwischen diesen Sequenzen und P(j) > 1, vorzugsweise > 2,5, noch bevorzugter > 5, am bevorzugtesten > 10 sein.

Spritzbare Polymere zeichnen sich durch einen hohen MFI aus. Die bisherigen Möglichkeiten den MFI und damit die Spritzgussfähigkeit zu verbessern sind begrenzt und/oder erfordern wie eingangs erwähnt den Einsatz von hochwertigen und teuren Polymeren. Im Unterschied dazu kann durch Zusatz eines Anteils an P(j) nicht nur die Spritzbarkeit von Spritzguss Polymeren verbessert werden; es können auch schwer oder nicht spritzbare Polymere eingesetzt werden, wodurch günstige Polymere mit guten Materialeigenschaften zum Einsatz kommen können. Solche Polymere erfordern ansonsten sehr hohe Spritz- und Formtemperaturen, wobei signifikant thermische Degradation eintritt. Durch die massive Steigerung des MFI, welche mit der Beimischung von P(j) möglich ist, können diese Temperaturen typischerweise bis zu rund 50°C, bei hohen Anteilen an P(j) sogar noch weiter gesenkt werden. Ein schwer spritzbares PE weist bei 190°C und 2,16kg einen MFI im Bereich von 0,3g/10min auf. Bei Zugabe von P(j) mit einem Anteil von 20% kann der MFI um einen Faktor 10 auf 3g/10min gesteigert werden, was charakteristisch für ein gut spritzbares PE ist Ein solches PE kann andererseits auf ein Niveau von 30g/10min gebracht werden, ein Wert der eine extrem leichte Spritzbarkeit charakterisiert und von herkömmlichen PE kaum erreicht werden kann. Erstaunlicherweise kann dies erreicht werden, ohne dass die Materialeigenschaften leiden, sie können sogar verbessert werden.

Typische Spritzguss HDPEs sind aufgrund des sehr geringen Anteils an Seitenketten von nur rund 2 pro 1000 C-Atome in der Kette sehr gut kristallisierbar. Daher ist es umso erstaunlicher, dass sogar bei HDPE die mechanischen Eigenschaften durch Zugabe von P(j) verbessert werden können. Dies ist darauf zurückzuführen, dass bei der Kristallisation die Schmelze infolge eines Anteils an P(j) eine reduzierte Viskosität aufweist und daher die Umlagerungsvorgänge der Makromoleküle erleichtert ablaufen können, und somit eine erhöhte Kristallinität und Eine Reduktion der Defekte der Kristallite erhalten wird. Damit wird auch verständlich, dass die positiven Effekte eines Anteils an P(j) mit zunehmender Abkühlgeschwindigkeit meist ausgeprägter sind.

### P(j)

Das zweite synthetische Polymer P(j) ist entweder linear oder nahezu linear (P(j)1) und besteht dann im Wesentlichen aus einer Sequenz, die aus denselben Monomereinheiten aufgebaut ist wie die Sequenzen des Polymers P(i). Synthetisch ist hier im Sinne von "nacht biologischen Ursprungs" verstanden und umfasst daher synthetische Polymere im engeren Sinne als auch Polymere mineralischen Ursprungs. Andererseits kann das Polymer P(j) auch Verzweigungen aufweisen oder sogar hyperverzweigt sein (P(j)2), wobei die Seitenketten aus denselben Monomereinheiten aufgebaut sind wie die Sequenzen des Polymers P(i) und eine Kettenlänge von > 15 aufweisen.

Wird P(j)1 aus der Schmelze abgekühlt oder aus einer Lösung ausgefällt, so entstehen Kristallite, wobei die Makromoleküle P(j)1 in gestreckter Konformation vorliegend üblicherweise Lamellen bilden, sodass die Lamellendicke identisch mit der Länge der Makromoleküle P(j)1 ist. Da zwischen den Lamellen kaum Verbindungen in Form von Makromolekülen, die in mindestens zwei Lamellen eingebaut sind, existieren, ist der Zusammenhalt dieser Lamellen minimal und trotz hoher Kristallinität sind die mechanischen Eigenschaften von solchen Kristallagglomeraten, insbesondere Festigkeit und Bruchdehnung, gering. Bei P(j)2 ist die Situation bezüglich der Sequenzen vergleichbar wie bei P(j)1, verschiedene Verzweigungen von P(j)2 können jedoch in verschiedene Mischkristallite eingebaut werden, wodurch Verknüpfungen zwischen Mischkristalliten nicht nur durch P(i), sondern auch durch P(j)2 ermöglicht werden und das Netzwerk somit verstärkt werden kann. Im Folgenden wird die Erfindung der Übersicht halber bezüglich P(j)1 beschrieben, die Diskussion ist jedoch analog auf P(j)2 übertragbar, wobei die Bedingungen an P(j)1 dann für die Seitenketten und Segmente von P(j)2 gelten. Der Einsatz von zweiten Polymeren der Art P(j)2 ist insofern sinnvoll, als dadurch die Anzahl der Verknüpfungen zwischen Heterokristalliten erhöht werden kann und insbesondere engmaschige Netzwerke gebildet werden. In Gegenwart eines Quellungsmittels kann dadurch bsw. der Quellgrad beeinflusst, insbesondere reduziert werden.

Der Polymerisationsgrad von P(j), DP(P(j)) ist > 15, vorzugsweise > 20, noch bevorzugter > 25, am bevorzugtesten > 30, wobei auch hier der Polymerisationsgrad als die Anzahl der kleinsten sich wiederholenden Einheit verstanden wird. Der Polymerisationsgrad weist üblicherweise eine Verteilung auf, wobei hier, mit Polymerisationsgrad das Zahlenmittel verstanden wird. Die Viskosität der Schmelze von P(j) nimmt mit dem Polymerisationsgrad zu, so dass hinsichtlich einer maximalen Steigerung des MFI möglichst tiefe Polymerisationsgrade optimal sind. Andererseits nimmt die Neigung zur Entmischung mit abnehmendem Polymerisationsgrad ebenfalls zu, so dass diesbezüglich höhere Polymerisationsgrade vorteilhaft sind. Die optimale Wahl hängt von der Art des Spritzgussteils ab, bei dünnwandigen Teilen, wo hohe Abkühlgeschwindigkeiten vorherrschen, werden Entmischungsvorgänge unterdrückt und können P(j) mit tiefsten Molekulargewichten eingesetzt werden, bei dickwandigen Teilen, insbesondere wenn ein Rückschmelzen stattfindet, sind P(j) mit höheren Molekulargewichten bevorzugt. Ebenso sind höhere Molekulargewichte bevorzugt, wenn hohe Schlagzähigkeiten gefordert sind. Der maximale Polymerisationsgrad DP(P(j)) ist < 400, vorzugsweise < 300, noch bevorzugter < 200, am bevorzugtesten < 150. Ein guter Kompromiss hinsichtlich Gewinn an MFI, Stabilität gegenüber Entmischung und hohe Schlagzähigkeit wird mit Polymerisationsgraden im Bereich von 30 bis 110 ermöglicht.

Es wurde gefunden, dass die synergistischen Effekte von P(i) und linearen P(j) mit abnehmender Polydispersität der Molekulargewichtsverteilung von P(j) deutlich zunehmen. Die Polydispersität ist als der Quotient des Gewichtsmittels und des Zahlenmittels der Molekulargewichtsverteilung definiert und kann minimal 1 sein, wenn alle Moleküle genau gleich lang sind. Vorteilhaft sind daher enge Molekulargewichtsverteilungen. Dies hängt damit zusammen, dass im Idealfall von gleichlangen P(j) sehr einfach Lamellenkristallite gebildet werden, wobei die P(j) Ketten in gestreckter Konformation vorliegen. Dann entspricht die Lamellendicke genau der Kettenlänge von P(j). Längere oder kürzere Ketten erschweren die Kristallisation und reduzieren die Stabilität des Kristallits. Die Polydispersität hat wenig Einfluss auf die Erhöhung des MFI, jedoch werden die mechanischen Eigenschaften mit abnehmender Polydispersität zunehmend besser. Bei hohen Polydispersitäten können die mechanischen Eigenschaften von P(i) + P(j) gegenüber P(i) sogar deutlich reduziert werden, insbesondere die Bruchdehnung und die Schlagzähigkeit. Die Polydispersität ist bei linearen P(j) daher < 5, vorzugsweise < 4, noch bevorzugter < 2, am bevorzugtesten < 1,5.

Bei hyperverzweigten P(j) mit kristallisierbaren Seitenketten liegt die Polydispersität im Bereich 3 - 40, vorzugsweise 4 - 35, noch bevorzugter 5 - 30, am bevorzugtesten 6 - 25.
Gemäß einer möglichen Ausführungsform der vorliegenden Erfindung ist P(i) ein Polyolefin und P(j) ist ausgewählt aus der Gruppe, bestehend aus n-Alkanen CₙH₂ₙ₊₂, Iso-Alkanen, zyklischen Alkanen CₙH₂ₙ, Polyethylen-Wachsen, Paraffinen und Paraffin-Wachsen mineralischen Ursprungs, Paraffinen und Paraffin-Wachsen synthetischen Ursprungs, hyperverzweigten-Alphaolefinen und Polypropylen-Wachsen. Beispiele für Paraffine mineralischen Ursprungs sind makrokristalline, intermediate oder mikrokristalline Paraffine, spröde, duktile, elastische oder plastische mikrokristalline Paraffine.
Ist P(i) ein Polyethylen, dann nehmen die mechanischen Eigenschaften von P(i) + P(j) in folgender Reihenfolge von P(j)-Typen zu: Paraffin Wachse, Mikrokristalline Wachse, PE-Wachse, hyperverzweigte PE-Wachse, engverteilte PE-Wachse.

Die Eignung von P(j) zur Bildung von vorteilhaften Mischkristalliten mit P(i) nimmt mit der relativen Dichte von P(j) gegenüber der Dichte eines idealen Kristallits von P(i) zu. Für PE ist die Dichte eines idealen Kristallits rund 0,99g/cm³ (Zahl hodrgestellt). Die Dichte von P(j) dividiert durch die Dichte eines idealen Kristallits von P(i) ist für Anwendungen, wo die mechanischen Eigenschaften von P(i) + P(j) mit P(i) vergleichbar sind > 0,9, vorzugsweise > 0,93, noch bevorzugter > 0,945, am bevorzugtesten > 0,96, für Anwendungen, wo die mechanische Eigenschaften von P(i) + P(j) gegenüber P(i) verbessert sind > 0,95, vor zugsweise > 0,96, noch bevorzugter > 0,97, am bevorzugtesten > 0,98.

Weiter wurde gefunden, dass ein Anteil von P(j) mit einem Polymerisationsgrad < 12 sich negativ auf die mechanischen Eigenschaften von P(i) + P(j) auswirkt. Dies liegt daran, dass diese kleinen Moleküle schnell diffundieren können und die Ausbildung von separaten Phasen von P(j) fördern. In einer bevorzugten Ausführung ist daher der Anteil von P(j) mit einem Polymerisationsgrad < 12 in Gew.% < 20, vorzugsweise < 15, noch bevorzugter < 10, am bevorzugtesten < 5. Der Anteil von P(j) mit einem Polymerisationsgrad < 10 ist in Gew.% < 15, vorzugsweise < 10, noch bevorzugter < 5, am bevorzugtesten < 3. Der Anteil von P(j) mit einem Polymerisationsgrad < 8 ist in Gew.% < 10, vorzugsweise < 5, noch bevorzugter < 2,5, am bevorzugtesten < 1,5.

Eine weitere Eigenschaft von P(j) mit einer Polydispersität von > 1,5,die positiv mit den mechanischen Eigenschaften von P(i) + P(j) korreliert, ist der relative Schmelz oder Tropfpunkt. In einer bevorzugten Ausführung ist der Schmelz- oder Tropfpunkt von P(j) in °C dividiert durch den Schmelzpunkt eines idealen Kristallits von P(i) in °C > 0,73, vorzugsweise > 0,8, noch bevorzugter > 0,88, am bevorzugtesten > 0,91. Der Schmelzpunkt eines idealen Kristallits von PE liegt bei rund 137°C. Bei Polydispersitäten von < 1,5 wurde gefunden, dass eine deutlich geringere Abhängigkeit der mechanischen Eigenschaften von P(i) + P(j) vom Schmelz- oder Tropfpunkt von P(j) existiert.

Bei mehr oder weniger linearen P(j) wurde gefunden, dass Kurzkettenverzweigungen mit Polymerisationsgrad < 12, insbesondere < 10 sich negativ auf die synergistischen Effekte von P(i) und P(j) und damit auf die mechanischen Eigenschaften auswirken. In einer bevorzugten Ausführung liegt der Anteil solcher Kurzkettenverzweigungen von P(j) daher bei < 0,05, vorzugsweise < 0,01, noch bevorzugter < 0,005, am bevorzugtesten < 0,001. Der Grund dafür liegt darin, dass solche Kurzkettenverzweigungen die Kristallisation behindern, da sie nicht regulär in den Kristallit eingebaut werden können.

Bei Langkettenverzweigung von P(j) mit Polymerisationsgrad > 15, vorzugsweise > 20 hingegen wirkt sich ein Anteil an solchen Verzweigungen positiv auf die mechanischen Eigenschaften auf, da somit verschiedene Segmente von P(j) in verschiedene Kristallite eingebaut werden können und dabei eine zusätzliche Vernetzung der Kristallite ermöglicht wird.

Eine wesentliche Kenngrösse von P(j) hinsichtlich der Maximierung des MFI von P(i) und P(j) ist die Viskosität von P(j). Je tiefer die Viskosität von P(j), umso grösser ist bei gleichem Anteil an P(j) die Erhöhung des MFI von P(i) + P(j). Der Zusammenhang für ein typisches Spritzguss LDPE ist in Figur 2 dargestellt. Je höher der MFI eingestellt werden kann, umso kürzere Zykluszeiten sind beim Spritzguss möglich, wie aus Figur 2 ersichtlich ist. Daher ist in einer bevorzugten Ausführung die Viskosität bei 150°C in cP von P(j) < 50'000, vorzugsweise < 1000, noch bevorzugter < 500, am bevorzugtesten < 250. Andererseits nimmt mit abnehmender Viskosität die Möglichkeit zur Entmischung von P(i) und P(j) zu, sodass die synergistischen Effekte nicht ausgenützt werden können. Daher ist in einer bevorzugten Ausführung die Viskosität bei 150°C in cP von P(j) > 4, vorzugsweise > 12, noch bevorzugter > 15, am bevorzugtesten > 20. Durch die vorgängigen Angaben steht ein sehr grosser Bereich von Viskositäten für P(j) zur Verfügung. Dabei ist zu beachten, dass die Schmelzviskosität von P(i) in der Grössenordnung von 1'000'000cP und höher liegt und der MFI bei konstantem Anteil an P(j) mit dem Logarithmus der Viskosität von P(j) abnimmt, sodass auch eine hohe Viskosität von 25'000cP immer noch eine beachtliche Erhöhung des MFI von P(i) + P(j) ermöglicht. Die Wahl der Viskosität von P(j) hängt auch vom eingesetzten Anteil an P(j) und dem Spritzgussteil ab. Bei Anteilen bis ca. 7% und bei hohen Abkühlgeschwindigkeiten, wie sie bei dünnwandigen Spritzgussteilen auftreten, können auch P(j) mit sehr tiefen Viskositäten eingesetzt werden, ohne dass Entmischung auftritt. Bei höheren Anteilen kommen zunehmend die höherviskosen P(j) zum Einsatz. In einer homologen Reihe von linearen P(j) nimmt die Viskosität zwar nicht linear, aber stetig mit dem Molekulargewicht zu. Verzweigte und insbesondere hyperverzweigte P(j) haben jedoch vergleichsweise tiefere Viskositäten. Dies ist ein Vorteil beim Einsatz von solchen P(j).

Optimierungsmöglichkeiten ergeben sich insbesondere auch durch den Einsatz von Kombinationen verschiedener Typen von P(j).

Bei einem Molekulargewicht < 600g/mol von P(j) liegt der Anteil an P(j) in Gew.% bei > 3, vorzugsweise > 5, noch bevorzugter > 7, am bevorzugtesten > 9. Mit grösser werdendem Anteil nimmt das Ausmass der Reduktion der Zykluszeit schnell zu. Bei einem Molekulargewicht < 600g/mol von P(j) liegt der maximale Anteil an P(j) in Gew. % bei < 30, vorzugsweise < 25, noch bevorzugter < 22, am bevorzugtesten < 17. Bei zu hohen Anteilen kann eine Reduktion der Bruchdehnung und der Schlagzähigkeit eintreten, insbesondere bei dickwandigen Spritzgussteilen und bei HDPE, während E-Modul und Streckgrenze bei HDPE kaum beeinträchtigt werden, in den meisten Fällen auch hier oberhalb den Werten von P(i) liegen.

Bei einem Molekulargewicht von 600 - 1000g/mol von P(j) liegt der minimale Anteil an P(j) in Gew.% bei > 3, vorzugsweise > 6, noch bevorzugter > 8, am bevorzugtesten > 10, während der maximale Anteil bei < 33, vorzugsweise < 28, noch bevorzugter < 24, am bevorzugtesten < 20 liegt. Bei einem Molekulargewicht von > 1000g/mol liegt der minimale Anteil an P(j) in Gew.% bei > 3, vorzugsweise > 7, noch bevorzugter > 10, am bevorzugtesten> 12, während der maximale Anteil in Gew.% bei < 37%, vorzugsweise < 33, noch bevorzugter < 28, am bevorzugtesten < 24 liegt. Je höher das Molekulargewicht von P(j), umso stabiler ist die molekulardisperse Mischung von P(i) + P(j) gegenüber Entmischung, weshalb höhere Anteile eingesetzt werden können, ohne dass die mechanischen Eigenschaften abnehmen, während die Zunahme des MFI weniger ausgeprägt ist und daher auch die minimalen Anteile vorzugsweise höher sind.

### Mechanische Eigenschaften

Die zuvor genannte Schlagzähigkeit ist die Schlagzähigkeit, wie sie an Proben gemessen werden kann, welche aus Filmen entnommen wurden. Bei Spritzgussteilen ist es jedoch nicht eine Beanspruchung im Bereich der Schlagenergie, welcher dieser Schlagzähigkeit entspricht, die zum Versagen führt, sondern wird das Versagen bei weit geringerer Schlagenergie infolge von eingefrorenen Spannungen und inneren Inhomogenitäten herbeigeführt. Solche Inhomogenitäten entstehen dann, wenn Polymerströme im Spritzgussteil aufeinander treffen und sich nicht wieder optimal verbinden. Indem der MFI erhöht und das Fliessverhalten verbessert wird, sind diese inneren Inhomogenitäten weniger ausgeprägt oder können sogar gänzlich vermieden werden wie auch innere Spannungen reduziert werden. Dadurch wird die Schlagzähigkeit des Spritzgussteils markant verbessert. Bezüglich der Schlagzähigkeiten, die an gepressten oder extrudierten Filmen gemessen werden, bedeutet dies, dass eine Reduktion der Schlagzähigkeit um rund 50% bei einer gleichzeitigen Zunahme des MFI um mindestens 50% noch keine Abnahme der Schlagzähigkeit am Spritzgussteil bewirkt. Andererseits ist eine gleich bleibende Schlagzähigkeit bei Filmproben bei einer Zunahme des MFI um mindestens 50% gleichbedeutend mit einer um mindestens 50% erhöhten Schlagzähigkeit am Spritzgussteil.

Durch Beimischen von niedermolekularen Komponenten leidet üblicherweise die Bruchdehnung, welche bereits bei einigen % Anteil an niedermolekularer Komponente deutlich abnimmt. Noch ausgeprägter ist die Situation bei der Schlagzähigkeit. Dass diese für viele Anwendungen wichtige Materialeigenschaft zumindest beibehalten oder sogar verbessert werden kann, ist eine Folge davon, dass die niedermolekulare Komponente in das makromolekulare Netzwerk eingebaut worden ist.

Das Ausmass der Zunahme des E-Moduls und der Streckgrenze hängt stark von der Dichte und damit von der Kristallinität von P(i) ab. Bei LDPE nimmt der E-Modul mit rund 5% pro 1% Anteil an P(j) zu, sodass bei 20% Anteil an P(j) der E-Modul verdoppelt werden kann, was eine ausserordentliche zusätzliche Verbesserung bedeutet. Die Streckgrenze nimmt rund 3% pro 1% Anteil an P(j) zu, sodass bei 20% Anteil an P(j) die Streckgrenze um 60% zunimmt, was ebenfalls sehr viel ist. Die Bruchdehnung nimmt im Bereich bis etwa zu einem Anteil von 10% an P(j) zu, durchläuft dann ein Maximum von 10% Zunahme und fällt schliesslich langsam ab bis etwa bei 15% wieder die anfängliche Bruchdehnung erreicht wird. LDPE weist gegenüber HDPE eine deutlich höhere Schlagzähigkeit auf, sodass diese Eigenschaft bei LDPE weniger bedeutsam ist. Der Verlauf der Schlagzähigkeit mit dem Anteil an P(j) bei Filmproben ist analog dem Verlauf der Bruchdehnung, wobei das Maximum bei rund 10% P(j) einer Zunahme von rund 20% entspricht. Der Gewinn an Schlagzähigkeit bei Spritzgussteilen ist jedoch deutlich höher als bei Filmen.

Bei HDPE sind die Zunahmen von E-Modul und Streckgrenze weniger ausgeprägt als bei LDPE, der E-Modul kann um rund 30% verbessert werden und die Streckgrenze um rund 15%, während die Bruchdehnung kaum beeinflusst wird ebenso wie die Schlagzähigkeit an Filmproben, wobei dies jedoch bei Spritzgussproben einer Verbesserung um rund 50% entspricht.

Bemerkenswert ist die deutliche Zunahme der Spannungsrisskorrosionsbeständigkeit bei der Zugabe von P(j). Bei HDPE wurde im Vergleich mit P(i) ohne einen Anteil an P(j) eine Zunahme bis zu um einen Faktor 2,5, bei LDPE bis zu einem Faktor 2,1 gefunden. Der Grund hierfür liegt einerseits darin, dass infolge des verbesserten Fliessvermögens eingefrorene interne Spannungen reduziert sind, andererseits ist bekannt, dass durch chemische Vernetzung bei PE die Spannungsrisskorrosionsbeständigkeit verbessert werden kann, während bei P(i) + P(j) die physikalische Vernetzung zunimmt.

Die genannten Verbesserungen hängen stark vom eingesetzten P(j) und dessen Anteil ab. Die genannten Verbesserungen betreffen jeweils eine optimale Wahl dieser Parameter. Hinsichtlich dem Typ von P(j) sind die bei der Beschreibung von P(j) bevorzugt genannten Struktur- und Eigenschaftsgrössen im Hinblick auf eine optimale Performance hinsichtlich der mechanischen Eigenschaften und der Reduktion der Zykluszeiten festgelegt worden.

In einer bevorzugten Ausführung liegt bei vergleichbaren Verarbeitungsbedingungen von P(i) und von P(i)+P(j) der Quotient des E-Moduls E(i,j) von P(i)+P(j) und des E-Moduls E(i) von P(i), E(i,j)/E(i) bei ≥ 1, vorzugsweise > 1,2, noch bevorzugter > 1,3, am bevorzugtesten > 1,5, maximal liegt der Quotient bei rund 3.

In einer bevorzugten Ausführung liegt bei vergleichbaren Verarbeitungsbedingungen von P(i) und von P(i)+P(j) der Quotient der Streckgrenze Sy(i,j) von P(i)+P(j) und der Streckgrenze Sy(i) von P(i), Sy(i,j)/Sy(i) bei > 1, vorzugsweise > 1,15, noch bevorzugter > 1,25, am bevorzugtesten > 1,35, maximal liegt der Quotient bei rund 1,7.

In einer bevorzugten Ausführung liegt bel vergleichbaren Verarbeitungsbedingungen von P(i) und von P(i)+P(j) der Quotient der Schlagzähigkeit J(i,j) von P(i)+P(j) und der Schlagzähigkeit J(i) von P(i), J(i,j)/J(i) beim Spitzgussteil bei > 1, vorzugsweise > 1,2, noch bevorzugter > 1,3, am bevorzugtesten > 1,5. Maximal liegt der Quotient bei rund 2.

### Mischverfahren

Damit P(i) und P(j) unter Heterokristallisation vorteilhafte Netzwerke bilden können, ist die Herstellung einer Schmelze, wobei die Komponenten in molekulardisperser Verteilung vorliegen, eine notwendige Voraussetzung. Da P(i) und P(j) im geschmolzenen Zustand extrem unterschiedliche Viskositäten aufweisen, wobei P(i) typischerweise eine hochviskose thermoplastische Schmelze bildet und P(j) mit einer Viskosität in der Grössenordnung von Wasser vorliegt, ist die Herstellung einer molekulardispersen Mischung dieser Komponenten problematisch. Ist die Mischung unzureichend, werden die Vorteile der Kombination von P(i) und P(j) nur teilweise oder gar nicht erhalten, insbesondere entstehen separierte Phasen, wodurch bsw. die Bruchdehnung und die Schlagzähigkeit massiv reduziert werden.

Die Polymere P(i) und P(j) liegen typischerweise als Pulver oder Granulat vor. Werden diese Komponenten gemeinsam einer thermoplastischen Verarbeitung, bsw. mittels Extrusion, zugeführt, so schmilzt P(j) üblicherweise zuerst und es entsteht eine dünnflüssige Flüssigkeit, vergleichbar geschmolzenem Kerzenwachs. P(i) andererseits benötigt für den Schmeizvorgang auch. Scherkräfte, wobei mechanische Energie in thermische Energie umgewandelt und so eine hochviskose thermoplastische Schmelze erhalten wird. Werden P(i) und P(j) zusammen dem Mischprozess zugeführt, bildet das dünnflüssige P(j) einen Film um die Granulatkörner oder die Pulverpartikel von P(i), wodurch kaum mehr Scherkräfte auf P(i) übertragen werden können. Diese Problematik ist beim Einsatz von Granulat ausgeprägter als bei Pulver und nimmt in beiden Fällen mit dem Anteil an P(j) zu.

Da Spritzgussextruder in der Regel Einwellenextruder sind und meist nur über beschränkte Mischmöglichkeiten verfügen, ergeben sich zur Herstellung einer molekulardispersen Mischung von P(i) + P(j) folgende Möglichkeiten:
1. Bei Gehalten an P(j) bis rund 3% können P(i) und P(j) in Granulat- oder Pulverform miteinander gemischt werden, bsw. mit einem Taumelmischer und die beiden Komponenten werden dann gemeinsam in den Spritzgussextruder dosiert. Eine Variante davon besteht darin, dass die beiden Komponenten separat im richtigen Verhältnis über zwei Dosiergeräte in die Einzugszone dosiert werden. Vorteilhaft ist auch bei tiefen Gehalten an P(j), wenn der Spritzgussextruder mit einem Mischteil ausgestattet ist, wie bsw. mit einem Madoc Element.
2. Bei Gehalten an P(j) von > rund 3% kann mit einem ersten Teil von P(j) entsprechend Variante 1 verfahren werden, wodurch die Viskosität der Schmelze reduziert wird und der zweite Teil leichter einmischbar ist. Das Einmischen des zweiten Teils erfolgt dann über eine separate Dosierung in einem Gehäuseteil des Extruders, wo mindestens teilweise bereits eine thermoplastische Schmelze vorliegt. Anschliessend kann die Mischung mit einem Mischteil, gegebenenfalls mit einem zweiten Mischteil, molekulardispers gemischt werden.
3. Bei allen Gehalten an P(j), insbesondere bei Gehalten > 7%, kann P(j) mittels eines Pre-Blends bzw. eines Masterbatches dem Spritzgussextruder zugeführt werden. Das Pre-Blend kann in Granulat- oder Pulverform mit P(i) gemischt werden und so dem Spritzgussextruder zugeführt werden, oder P(i) und das Pre-Blend werden über zwei separate Dosierungen in die Einzugszone des Spritzgussextruders dosiert, oder das Pre-Blend wird nach der Einzugszone von P(i) in einem Gehäuse zugeführt, wo P(i) in einem mindestens teilweise plastifizierten Zustand vorliegt. Auch bei dieser 3. Variante ist die Konfiguration des Spritzgussextruders mit einem oder mehreren Mischteilen vorteilhaft.
   Die Herstellung eines molekulardispersen Pre-Blends, das sehr hohe Gehalte an P(j) aufweisen kann, erfordert spezielle Extruderkonfigurationen mit dispersiv und distributiv wirkenden Mischelementen. Es können Einwellenextruder mit Mischteilen eingesetzt werden, bevorzugt sind aber Zweiwellenextruder, deren Schneckenkonfiguration Knetblöcke und/oder rückfördernde Elemente aufweist. Bei einer ausreichenden Anzahl von Mischelementen können P(i) und P(j) analog Variante 1 verarbeitet werden. Mit zunehmendem Anteil an P(j) kommt bevorzugt eine Verarbeitung analog Variante 2 zum Einsatz. Um eine eingestellte molekulardisperse Mischung aufrecht zu erhalten sind hohe Abkühlraten notwendig, wie sie bsw. bei der Strangextrusion in Wasser entstehen.
   Pre-Blends weisen bei hohen Anteilen an P(j), insbesondere dann, wenn P(i) bereits einen hohen MFI aufweist, eine für Polymerschmeizen ungewöhnlich tiefe Viskosität auf, sodass spezielle Granulationstechniken für nieder und niedrigstviskose Polymerschmelzen zum Einsatz kommen, bsw. Unterwassergranulation, Unterwasserstranggranulation oder Vertropfungsverfahren, insbesondere Vertropfung in Wasser.
4. Es können auch verschiedene Kombinationen der obigen 3 Varianten eingesetzt werden. Insbesondere bei hohen Anteilen an P(j) von > 14% känn es bsw. sinnvoll sein, einen ersten Teil an P(j) nach Variante 1 zuzuführen und den zweiten Teil nach Variante 3.

Von den verschiedenen Varianten ist insbesondere bei höheren Anteilen an P(j) die Variante 3 wirtschaftlich die interessanteste, da die Herstellung des Pre-Blends unabhängig vom Spritzgussverfahren geschieht und die Umstellung der Spritzgussverfahren somit weniger Modifikationen verangt. Eine einzige grosse Anlage zur Herstellung von Pre-Blends kann dann eine Vielzahl von Spritzgussextrudem bedienen. Solche Pre-Blends können bis zu 85% an P(j) aufweisen.

Die Polymermischung eignet sich zur Herstellung eines Gegenstands, wobei ein erstes synthetisches Polymer P(i) und ein zweites synthetisches Polymer P(j) in einen geschmolzenen Zustand überführt werden, die beiden aufgeschmolzenen Polymere P(i) und P(j) molekulardispers gemischt werden und die molekulardisperse Mischung portioniert und abgefühlt wird, um den verfestigten Gegenstand aus der Polymermischung zu erhalten. Zur erfindungsgemässen Herstellung von Spritzgussteilen aus der Polymermischung erfolgt das Portionieren und Abkühlen dabei durch Einspritzen der molekulardispersen Mischung in eine gekühlte oder geheizte Spritzgussform.

Es können aber auch nicht gemäss der vorliegenden erfindung Granuliatteilchen aus der Polymermischung hergestellt werden. Dadurch erhält man die weiter oben besprochenen Pre-Blends oder Masterbatches in Schüttgutform mit einem hohen Gehalt and P(j). Das Portionieren und Abkühlen der Schmelze erfolgt dabei durch Granulation in einem Kühlmedium, insbesondere durch Stranggranulation in einer Kühlflüssigkeit (z.B. Wasser) oder durch Vertröpfein der Schmelze mittels einer ggfs. vibrierenden Düsenplatte in ein Kühlfluid. Als Kühlfluid kann Stickstoff, Luft oder ein anderes Inertgas verwendet werden, dem ggfs. eine zerstäubte Kühlflüssigkeit (z.B. Wasser) beigemischt wird. Alternativ kann die Schmelze auch direkt in eine stehende oder vorzugsweise strömende Kühlflüssigkeit vertröpfelt werden.

### Anwendungen

Die Polymermischungen können erfindungsgemass in allen Bereichen von Spritzgussartikeln vorteilhaft eingesetzt werden. Bsw. im Bereich Verpackung, Konsumgüter, Bau und Konstruktion, sowie Transport und Logistik. Beispiele in diesen Bereichen sind Behälter, Container, Kübel, Kisten. Flaschenkisten, Verschlüsse, Paletten, Rohlinge, Möbel, Gartenmöbel, Gehäuse, Gerätegeäuse, Maschinenbauteile, Zahnräder, Medizinprodukte, Präsisionsteile, CD's, Spielzeuge. Diese Aufzählung ist nicht einschränkend zu verstehen.

### Beispiele

Die folgenden illustrierenden Beispiele sind nicht einschränkend zu verstehen.

### Beispiel 1

Dieses Beispiel zeigt den Einfluss verschiedener Anteile von P(j) auf den MFI diverser Mischungen von P(i) und P(j), wobei für P(i) diverse Polyethylene eingesetzt wurden.

Mittels eines gegenläufigen, dichtkämmenden Collin Extruders ZK 50/12D mit 12UD und D = 50mm wurde für P(i) ein Spektrum von 10 verschiedenen LDPE und HDPE Lupolene mit MFIs im Bereich von 0,1 bis 20g/10min bei 80upm und 4kg/h extrudiert, wobei die Plastifizierung von P(i) mittels einer Dispergierscheibe in der zweiten Zone sichergestellt wurde, wonach in der dritten Zone als niedermolekulare Komponente P(j) ein PE-Wachs Granulat mit einer Viskosität bei 150°C von 4cP, einem Molekulargewicht von rund 500g/mol und einer Polydispersität von 1,1 zudosiert wurde. Nachfolgend wurde mit einer zweiten Dispergierscheibe in der vierten Zone eine molekulardisperse Mischung von P(i) + P(j) erhalten und als Strang über eine Lochdüse extrudiert. Die Einzugszone wurde auf 40°C, die Zonen 2 bis 4, sowie Adapter und Düse bei Polymeren mit hohem MFI auf 200°C, bei Polymeren mit tiefem MFI auf 230°C eingestellt. Der Strang wurde wassergekühlt und zu Granulat zerkleinert, womit jeweils 3 MFI Messungen bei 180°C und 3,8kg durchgeführt wurden.

In Figur 1 ist der Verlauf des MFI von P(i) + P(j) in Funktion des Anteils an P(j) dargestellt, wobei die oberste und unterste Kurve das Streuband angeben, innerhalb dem sich die erhaltenen Messwerte für unterschiedliche PE's befinden. Die mittlere Kurve gibt einen durchschnittlichen Verlauf wieder. Es wird deutlich, dass bei Gehalten an P(j) bis 10 -15% die Zunahme des MFI linear erfolgt und danach überproportional zunimmt. Bereits im linearen Bereich ist die Zunahme des MFI jedoch massiv, sodass auch in diesem Bereich die Zykluszeiten bereits deutlich reduziert werden können, wie der Vergleich mit Figur 2 zeigt.

### Beispiel 2

Dieses Beispiel zeigt den Einfluss der Viskosität von P(j) und dem Anteil an P(j) auf den MFI von P(i) + P(j).

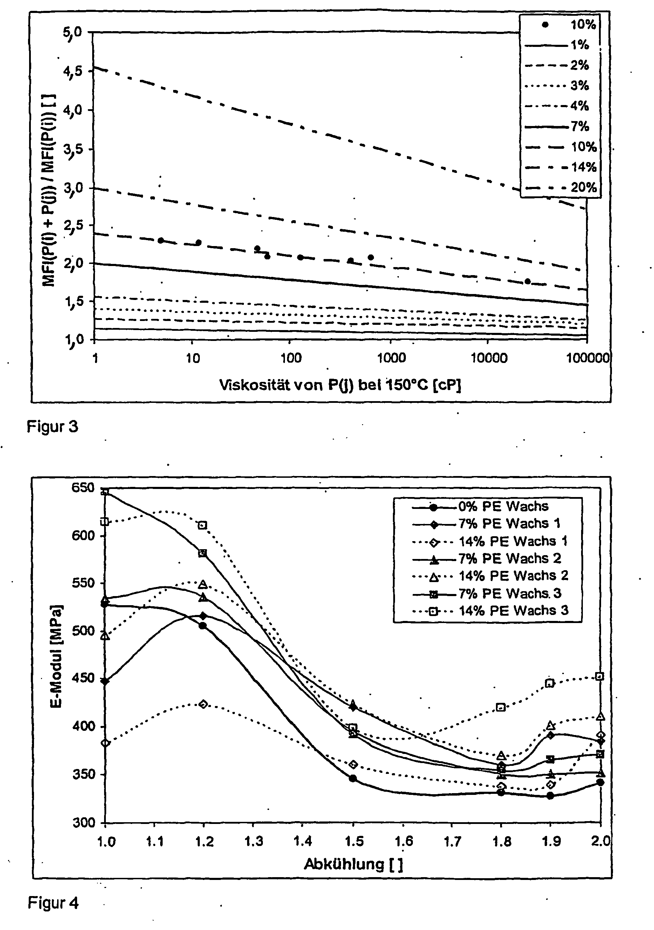

In gleicher Art und Weise wie in Beispiel 1 wurden Mischungen eines LDPE mit einem hohen MFI bei 180°C und 3,8kg von 9,6g/10min mit 3, 10 und 20% Anteil eines Spektrums von P(j) mit Viskositäten bei 150°C im Bereich von 4 bis 25'000cP hergestellt, granuliert und davon der MFI bei 180°C und 3,8kg gemessen. Als niedermolekulare Komponenten wurden Paraffine, Fischer-Tropsch Wachse, Mikrokristalline Wachse und PE-Wachse eingesetzt. Hinsichtlich des MFI sind primär die Viskositäten von P(j) relevant, die spezifischen Strukturparameter, welche für die mechanischen Eigenschaften von P(i) + P(j) von grosser Bedeutung sind, spielen hier eine untergeordnete Rolle. Der Verlauf der Zunahme des MFI von P(i) + P(j) gegenüber dem MFI von P(i) mit zunehmender Viskosität von P(j) ist in Figur 3 für Anteile an P(j) von 1 bis 20% dargestellt. Der Übersichtlichkeit halber wurden die Messpunkte nur für 10% P(j) eingetragen. Die Kurven für andere Anteile als 3, 10 und 20% wurden mittels Interpolation erhalten.

### Beispiel 3

Dieses Beispiel zeigt den Einfluss von engverteilten PE-Wachsen mit unterschiedlichem Molekulargewicht auf die Materialeigenschaften von Mischungen dieser PE-Wachse mit einem typischen Spritzguss HDPE bei einem Range von Abkühlungsgeschwindigkeiten wie sie im Spritzguss zur Anwendung kommen.

In gleicher Art und Weise wie in Beispiel 1 wurden Mischungen eines Spritzguss HDPE mit einem hohen MFI bei 180°C und 3,8kg von 9,4g/10min mit 0, sowie 7 und 14% Anteil von drei vollständig linearen PE-Wachsen mit Polydispersitäten von 1,1 hergestellt Die Molekulargewichte der Wachse, deren Polymerisationsgrad, Dichten und deren Viskositäten bei 150°C waren wie folgt: PE-Wächs 1: 500g/mol, 18, 0,93g/cm³, 4cP; zahle nochgestellt) 4cP; PE-Wachs 2: 1000g/mol, 36, 0,96g/cm³, 12cP; PE-Wachs 3: 3000g/mol, 107; 98g/cm³, 130cP. An der Düse wurde jeweils während 10 Sekunden rund 11g der Polymermischungen auf einer Platte mit 180°C gesammelt und sogleich bei 180°C zu einem Film von 0,3mm Dicke gepresst. Für jede Polymermischung wurden dann folgende Pressund Abkühlungsbedingungen angewandt.
- Abkühlung 1.0:: Lagerung 30 Sekunden in der Presse bei 180°C, dann Transferierung des Presslings in einen Ofen bei 80°C und Lagerung darin während 3 Minuten, danach Abkühlung auf Raumtemperatur in der Atmosphäre.
- Abkühlung 1.2:: Lagerung 30 Sekunden in der Presse bei 180°C, dann Abkühlung in der Atmosphäre
- Abkühlung 1.5:: Lagerung 30 Sekunden in der Presse bei 180°C, dann Transferierung des Presslings in ein Wasserbad bei 70°C und Lagerung darin während 3 Minuten, danach Abkühlung auf Raumtemperatur in der Atmosphäre.
- Abkühlung 1.8:: Lagerung 3 Minuten in der Presse bei 180°C, dann Transferierung des Presslings in ein Wasserbad bei 16°C .
- Abkühlung 1.9:: Lagerung 1,5 Minuten in der Presse bei 180°C, dann Transferierung des Presslings in ein Wasserbad bei 16°C.
- Abkühlung 2.0:: Lagerung 30 Sekunden in der Presse bei 180°C, dann Transferierung des Presslings in ein Wasserbad bei 16°C.

Die Kühlgeschwindigkeiten bei den verschiedenen Behandlungen waren in etwa wie folgt: 1.0: 5°C/min; 1.2: 20°C/min; 1.5: 20°C/sek; 1.8: 50°C/sek; 1.9: 50°C/sek; 2.0: 50°C/sek. Die Abkühlungen 1.8, 1.9 und 2.0 wurden angewandt, um mögliche Entmischungen zu untersuchen. Insgesamt umfassen die untersuchten Abkühlungen das ganze Spektrum an Abkühlgeschwindigkeiten, die bei Spritzgussteilen zum Einsatz kommen können. Dabei ist zu beachten, dass die Abkühlgeschwindigkeiten Innerhalb eines Spritzgussteils sehr stark variierten können. Bei einem dickwandigen Spritzgussteil bsw. kann an der Oberfläche eine Abkühlung entsprechend 1.8 bis 2.0 erfolgen, während sie im Zentrum entsprechend 1.0 bis 1.2 erfolgt.

In Figur 4 sind die E-Moduli für die verschiedenen Rezepturen bei den diversen Abkühiungen dargestellt. In allen Fällen ausser bei dem PE Wachs 1 mit dem tiefsten Molekulargewicht und den langsamsten Abkühlraten wurden höhere E-Moduli erhalten. Dies ist auf die synergistische Wechselwirkung zwischen P(i) und P(j) und die verbesserte Kristallisierbarkeit infolge des Anteils an P(j) zurückzuführen. Bei Wachs 1 sind die E-Moduli bei 7% höher als bei 14%, da bei 14% eine teilweise Entmischung stattfinden kann. Bei den anderen Wachsen ist die Situation umgekehrt, die Entmischung ist hier infolge des deutlich höheren Molekulargewichts erschwert, findet aber immer noch zu einem geringen Anteil statt, wie der Kurvenverlauf im Bereich der Abkühlungen 1.8 bis 2.0 zeigt, allerdings ohne die Eigenschaften wirklich negativ zu beeinflussen, da die Werte immer noch höher sind, als bei der Referenz Kurve mit 0% Wachs. Das Verhalten der Streckgrenze verläuft analog dem Verhalten des E-Moduls.

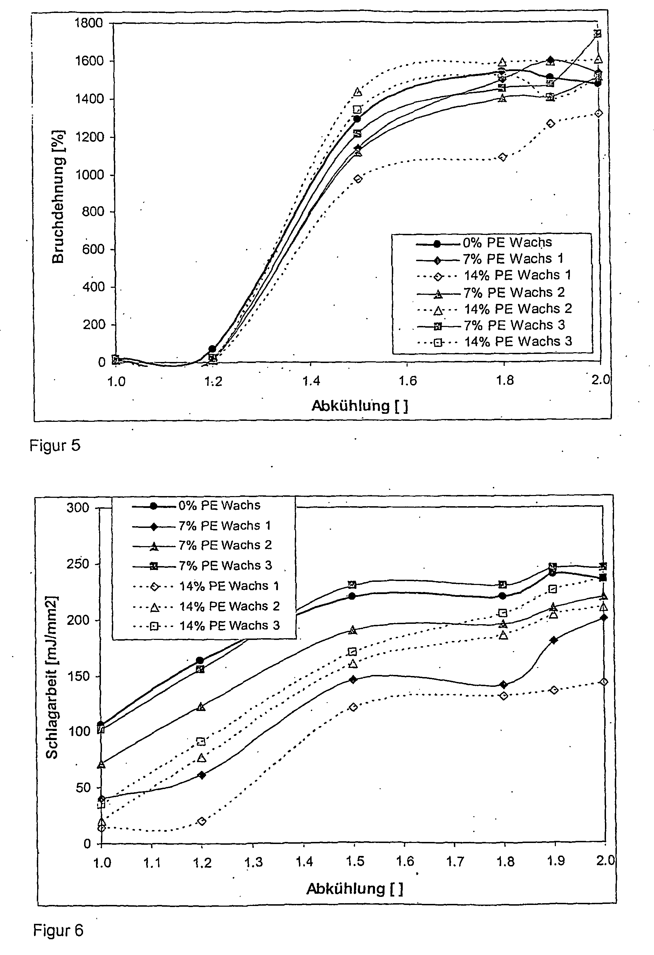

In Figur 5 sind die Bruchdehnungen dargestellt. Die reduzierten Bruchdehnungen bei 14% Wachs zeigen auch hier die erleichterte Entmischung bei tiefem Molekulargewicht von P(j). Alle anderen Messwerte sind in etwa vergleichbar mit der Referenz Kurve mit 0% Wachs. Dies ist erstaunlich, da die Bruchdehnung üblicherweise empfindlich auf niedermolekulare Additive reagiert.

In Figur 6 sind die Schlagzähigkeiten dargestellt. Diese Eigenschaft reagiert am empfindlichsten auf niedermolekulare Beimischungen. Dennoch konnten beim PE Wachs 3 mit 3000g/mol Molekulargewicht mit der Referenz identische Werte erhallten werden. Erst bei 14% wird eine Reduktion festgestellt, die allerdings bei hohen Abkühlraten nur geringfügig ist. Der Einfluss des Molekulargewichts kommt mit den Kurven für Wachs 1 und 2 deutlich zum Ausdruck.

Spritzgussteile weisen typischerweise eingefrorene Spannungen auf, wodurch die Schlagzähigkeit beeinträchtigt wird. Ausserdem sind die Stellen in Spritzgussteilen, wo Polymerströme aufeinander treffen besondere Schwachstellen hinsichtlich der Zähigkeit, weil die Verbindung nicht optimal ist. Durch eine Erhöhung des MFI mittels Zugabe von P(j) können diese beiden Probleme entschärft werden, sodass aus diesem Grund die Zähigkeit verbessert wird. Daher kann eine reduzierte Zähigkeit in Figur 6 bei einem Spritzguss Teil immer noch höher sein, als die Zähigkeit bei 0% Wachs.

### Analysen

Die MFI Messungen wurden mit einem mit einem Zwick MFI-Tester Typ 4106.1 durchgeführt.

Die Zugversuche wurden bei 22°C mit einer Instron 4502 Zugprüfmaschine bei einer Traversengeschwindigkeit von 100mm/min an normierten Zugproben nach DIN 53504 S3, weiche aus Filmen von 0,3mm Dicke ausgestanzt wurden, bestimmt. Die Messresultate sind Mittelwerte von jeweils 5 Einzeimessungen.

Die Schlagzähigkeit bzw. Schlagarbeit wurde nach der Izod Impact Methode mit einem Frank Impact Tester mit einem Schlagpendel von 1 Joule 1 Joule bestimmt. Als Probenkörper wurden Filmproben mit 5mm Breite und 0,3mm Dicke eingesetzt. Die Länge der Proben zwischen den beidseitigen Einspannungen war 40mm.

Die Spannungsrisskorrisionsbeständigkeit wurde nach ASTM D-1693 bei Bedingungen B (50°C, 100% Igepal CO-630) am gebogenen Streifen bestimmt, wobei die Zeit bestimmt wurde, wonach 50% der Proben versagten.

### Figurenbeschreibung

- Figur 1: zeigt den Einfluss des Gehalts an P(j) auf den MFI der Mischung von P(i) und P(j)
- Figur 2: zeigt den Einfluss der Zunahme des MFI auf die Reduktion der Zykluszeit
- Figur 3: zeigt den Einfluss der Viskosität und des Anteils an P(j) auf den MFI der Mischung von P(i) und P(j)
- Figur 4: zeigt den Einfluss verschiedener engverteilter PE-Wachse auf den E-Modul
- Figur 5: zeigt den Einfluss verschiedener engverteilter PE-Wachsen auf die Bruchdehnung
- Figur 6: zeigt den Einfluss verschiedener engverteilter PE-Wachse auf die Schlagzähigkeit

## Patentansprüche

1. Spritzguss-Formkörper, erhalten aus einer Polymermischung, wobei:
a) die Polymermischung ein synthetisches erstes Polymer P(i) und mindestens ein zweites synthetisches Polymer P(j) und gegebenenfalls ein Quellungsmittel für P(i) und/oder P(j) aufweist;
b) das Polymer P(i) einen Polymerisationsgrad DP(P(i)) > 3000 und mindestens eine Art von kristallisierbaren Sequenzen A mit einem Polymerisationsgrad DPs(P(i)) dieser Sequenzen > 20 aufweist;
c) das Polymer P(j) aus denselben Monomereinheiten aufgebaut ist wie die Sequenzen A von P(i) und der Polymerisationsgrad DP(P(j)) von P(j) 15 < DP(P(j)) < 400 ist; wobei bei der Herstellung des Spritzguss-Formkörpers:
d) die Polymermischung molekulardispers gemischt und eine Phasenseparation der beiden Polymere P(i) und P(j) unterdrückt wird;
e) die Polymermischung mittels eines Spritzgussverfahrens zu dem Spritzguss-Formkörper geformt wird; und
f) bei der Erstarrung der Polymermischung unter Heterokristallisation ein Netzwerk ausgebildet wird.

2. Spritzguss-Formkörper nach Anspruch 1, **dadurch gekennzeichnet, dass** P(j) linear ist und einen Anteil an Kurzkettenverzweigungen von < 0,05 aufweist oder dass P(j) verzweigt ist und Langkettenverzweigungen mit einem Polymerisationsgrad von > 15 aufweist.

3. Spritzguss-Formkörper nach einem der vorangehenden Ansprüche, **dadurch gekennzeichnet, dass** P(j) linear ist und eine Polydispersität < 5 aufweist.

4. Spritzguss-Formkörper nach einem der vorangehenden Ansprüche, **dadurch gekennzeichnet, dass** der Anteil von P(j) mit einem Polymerisationsgrad < 12 an der Polymermischung in Gew.% < 20 ist.

5. Spritzguss-Formkörper nach einem der vorangehenden Ansprüche, **dadurch gekennzeichnet, dass** der Anteil von P(j) an der Polymermischung in Gew.% im Bereich von 1 bis 40 % liegt.

6. Spritzguss-Formkörper nach einem der vorangehenden Ansprüche, **dadurch gekennzeichnet, dass** P(i) bzw. die Sequenzen A von P(i) aus folgender Gruppe ausgewählt sind: PET, PUR, ABS, PVC, Polyolefine, insbesondere PE und PP.

7. Spritzguss-Formkörper nach einem der vorangehenden Ansprüche, **dadurch gekennzeichnet, dass** P(i) ein Polyolefin ist und P(j) aus folgender Gruppe ausgewählt wird: n-Alkane CₙH₂ₙ₊₂; Iso-Alkane; zyklische Alkane CₙH₂ₙ; Polyethylen-Wachse; Paraffine und Paraffin-Wachse mineralischen Ursprungs, wie makrokristalline, intermediate oder mikrokristalline Paraffine, spröde, duktile, elastische oder plastische mikrokristalline Paraffine; Paraffine und Paraffin-Wachse synthetischen Ursprungs; hyperverzweigte-Alphaolefine; Polypropylen-Wachse.

## Claims

1. Injection moulded part, obtained from a polymer mixture, wherein
a) the polymer mixture comprises a synthetic first polymer P(i) and at least one second synthetic polymer P(j) and optionally a swelling agent for P(i) and/or P(j);
b) the polymer P(i) has a polymerization degree DP(P(i)) > 3000 and at least one type of crystallizable sequences A with a polymerization degree DPs(P(i)) of these sequences of > 20;
c) the polymer P(j) is built up of the same monomer units as the sequences A of P(i), and the polymerization degree DP(P(j)) of P(j) is 15 < DP(P(j)) < 400; wherein during the manufacture of the injection moulded part:
d) the polymer mixture is mixed in a molecularly disperse manner, and a phase separation of the two polymers P(i) and P(j) is suppressed;
e) the polymer mixture is shaped into the injection moulded part by means of an injection moulding process; and
f) a network is formed during the solidification of the polymer mixture by heterocrystallization.

2. The injection moulded part according to claim 1, **characterized in that** P(j) is linear and has a portion of short-chain branches of < 0.05 or that P(j) is branched and has long-chain branches with a polymerization degree of > 15.

3. The injection moulded part according to any one of the preceding claims, **characterized in that** P(j) is linear and has a polydispersity of < 5.

4. The injection moulded part according to any one of the preceding claims, **characterized in that** the portion of P(j) with a polymerization degree of < 12 in the polymer mixture is < 20 % by weight.

5. The injection moulded part according to any one of the preceding claims, **characterized in that** the portion of P(j) in the polymer mixture is in the range of 1 to 40 % by weight.

6. The injection moulded part according to any one of the preceding claims, **characterized in that** P(i) or the sequences A of P(i) are selected from the following group: PET, PUR, ABS, PVC, polyolefins, in particular PE and PP.

7. The injection moulded part according to any one of the preceding claims, **characterized in that** P(i) is a polyolefin and P(j) is selected from the following group: n-alkanes CₙH₂ₙ₊₂; iso-alkanes; cyclic alkanes CₙH₂ₙ; polyethylene waxes; paraffins and paraffin waxes of mineral origin, such as macrocrystalline, intermediate or microcrystalline paraffins, brittle, ductile, elastic or plastic microcrystalline paraffins; paraffins and paraffin waxes of synthetic origin; hyper-branched alpha olefins; polypropylene waxes.

## Revendications

1. Corps moulé par injection, obtenu à partir d'un mélange de polymères,
a) ledit mélange de polymères comportant un premier polymère synthétique P(i) et au moins un deuxième polymère synthétique P(j) et, le cas échéant, un agent de gonflage pour p(i) et/ou P (j) ;
b) le polymère P(i) présentant un degré de polymérisation DP(P(i)) > 3000 et au moins un type de séquences cristallisables A, le degré de polymérisation DPs(P(i)) desdites séquences étant > 20 ;
c) le polymère P(j) étant composé des mêmes unités monomères que les séquences A de P(i) et le degré de polymérisation DP(P(j)) de P(j) étant tel que 15 < DP(P(j)) < 400 ; la préparation dudit corps moulé par injection comportant :
d) un mélange à dispersion moléculaire dudit mélange de polymères, tout en évitant une séparation de phases entre le deux polymères P(i) et P(j) ;
e) une mise en forme dudit mélange de polymères au moyen d'un procédé de moulage par injection afin d'obtenir ledit corps moulé par injection ; et
f) lors de la solidification dudit mélange de polymères, une formation d'un réseau par hétérocristallisation.

2. Corps moulé par injection selon la revendication 1, **caractérisé en ce que** le P(j) est linéaire et comporte une proportion de ramifications à chaîne courte de < 0,05 ou que le P(j) est ramifié et présente des ramifications à chaîne longue ayant un degré de polymérisation de > 15.

3. Corps moulé par injection selon l'une des revendications précédentes, **caractérisé en ce que** le P(j) présente une polydispersité < 5.

4. Corps moulé par injection selon l'une des revendications précédentes, **caractérisé en ce que** la proportion de P(j) ayant un degré de polymérisation < 12 représente, en poids, < 20 % dudit mélange de polymères.

5. Corps moulé par injection selon l'une des revendications précédentes, **caractérisé en ce que** la proportion de P(j), en poids, est comprise entre 1 et 40 % dudit mélange de polymères.

6. Corps moulé par injection selon l'une des revendications précédentes, **caractérisé en ce que** le P(i) et/ou les séquences A de P(i) sont choisis dans le groupe suivant : PET, PUR, ABS, PVC, polyoléfines, notamment PE et PP.

7. Corps moulé par injection selon l'une des revendications précédentes, **caractérisé en ce que** le P(i) est une polyoléfine et le P(j) est choisi dans le groupe suivant : les n-alcanes CₙH₂ₙ₊₂ ; les isoalcanes ; les alcanes cycliques CₙH₂ₙ ; les cires de polyéthylène ; les paraffines et les cires de paraffine d'origine minérale telles que les paraffines macrocristallines, intermédiaires ou microcristallines, les paraffines microcristallines cassantes, ductiles, élastiques ou plastiques ; les paraffines et cires de paraffine d'origine synthétique ; les alpha-oléfines hyperbranchées ; les cires de polypropylène.
